# EUROPEAN PATENT APPLICATION

(11) **EP 3 258 076 A1**
(43) Date of publication of application: **20.12.2017**
(21) Application number: 17175769.3
(22) Date of filing: 13.06.2017
(51) Int. Cl.: F01N 3/20, F01N 5/02, F02G 5/00, F02G 5/02, F01K 23/06

(54) **WASTE HEAT RECOVERY SYSTEM**

(30) Priority: 13.06.2016 US 201662349272 P
(71) Applicant: Dana Limited, Maumee, OH 43537 (US)
(72) Inventor: VERSTEYHE, Mark R.J., 8020 Oostkamp (BE); HOMBSCH, Maximilian, 9000 Gent (BE)
(74) Representative: Pfenning, Meinig & Partner mbB

(57) **Abstract**

An integrated internal combustion engine and waste heat recovery system including an internal combustion engine, a system of exhaust gas conduits, a first heat exchanger in fluid communication with the exhaust gas conduits, a second heat exchanger in fluid communication with the exhaust gas conduits downstream of the first exchanger, a selective catalytic reduction unit positioned between the first and second heat exchangers, a waste heat recover system (WHR) and a mechanical connection. The WHR system includes a system of working fluid conduits in fluid communication with the first and second heat exchangers, an expander, a condenser, and a pump. The mechanical connection connects the internal combustion engine and the expander. The heat exchangers are configured to facilitate thermal communication between the working fluid and exhaust gas conduits. The working fluid and exhaust gas conduits include bypass conduits around the heat exchangers.

## Description

### RELATED APPLICATION

This application claims benefit of priority to U.S Provisional Patent Application No. 62/349,272, filed on June 13, 2016, the entire contents of which are hereby incorporated by reference.

### FIELD

A system which integrates a waste heat recovery system, a selective catalytic reduction unit and an internal combustion engine to lower pollution and reduce energy consumption.

### BACKGROUND

Conventional internal combustion engines (ICE) have a limited brake thermal efficiency. The energy produced during the combustion process can only partially be converted to useful work. Most of the fuel energy is rejected as waste heat in exhaust gases from the ICE. Waste heat recovery (WHR) systems can be used to recover some or all of the waste heat from the exhaust gases to improve the thermal efficiency of the engine and/or convert it to useful energy (e.g., electrical and/or mechanical energy).

WHR systems for use with ICEs can be a closed or open circuit, thermodynamic system that employs a heat driven specific volume increase of a working fluid to convert heat energy into motive power. The WHR system can utilize the Rankine cycle or the Organic Rankine cycle; however, other thermodynamic cycles are used in WHR systems, including, but not limited to, the trans- or supercritical (Organic) Rankine cycle and the open or closed Brayton cycle.

Additionally, Selective Catalytic Reduction (SCR) units are used in automotive applications to reduce the nitrogen oxide (NOₓ) emissions from exhaust streams from internal combustion engines. Exhaust streams from ICEs can include a heterogeneous mixture of gaseous emissions including carbon monoxide, unburned hydrocarbons and NOₓ. In SCR units, a gaseous reductant is injected into the exhaust stream from an ICE and then reacted on a catalytic surface to reduce the NOₓ concentration. SCR units require a significant amount of time to allow the reductant to sufficiently react with the catalytic surface to effectively reduce the NOₓ concentration. In low temperature environments, a SCR unit may not efficiently clean the exhaust stream until several minutes after an engine has been started, therefore, the SCR units require high temperatures to effectively filter NOₓ.

Therefore, it would be beneficial to integrate an internal combustion engine, a SCR unit and a WHR system to allow for the combined benefits of a lower pollution rate and a lower energy consumption rate.

### SUMMARY

Provided herein is an integrated internal combustion engine and waste heat recovery system including an internal combustion engine, a system of exhaust gas conduits connected to the internal combustion engine, a first heat exchanger in fluid communication with the exhaust gas conduits, a second heat exchanger in fluid communication with the exhaust gas conduits downstream of the first heat exchanger, a selective catalytic reduction unit positioned between the first and second heat exchangers along the exhaust gas conduits, a waste heat recovery (WHR) system and a mechanical connection. The WHR system includes a system of working fluid conduits in fluid communication with the first and second heat exchangers, wherein the first heat exchanger is positioned downstream of the second heat exchanger along the working fluid conduits; an expander positioned along the working fluid conduits downstream from the first heat exchanger; a condenser positioned along the working fluid conduits downstream from the expander; and a pump positioned along the working fluid conduits downstream from the condenser and upstream from the second heat exchanger. The mechanical connection connects the internal combustion engine and the expander. The first and second heat exchangers are configured to facilitate thermal communication between the working fluid conduits and the exhaust gas conduits. The working fluid conduits include bypass conduits around the heat exchangers and the exhaust gas conduits include bypass conduits around the heat exchangers.

In some embodiments, the WHR system includes a pressure-increasing device positioned along the working fluid conduits between the first and second heat exchanger. In some embodiments, the WHR system includes a flash tank positioned along the working fluid conduits upstream of the first heat exchanger and downstream from the expander. In some embodiments, the WHR system includes a second expander positioned along with working fluid conduits downstream from the second heat exchanger and upstream of the first heat exchanger.

### BRIEF DESCRIPTION OF THE DRAWINGS

The above, as well as other advantages of the present embodiments, will become readily apparent to those skilled in the art from the following detailed description when considered in the light of the accompanying drawings in which:
FIG. 1 is a schematic view of a preferred embodiment of an integrated internal combustion engine and waste heat recovery system; and
FIG. 2 is a schematic view of another embodiment of an integrated internal combustion engine and waste heat recovery system;
FIG. 3 is a schematic view of another embodiment of an integrated internal combustion engine and waste heat recovery system;
FIG. 4 is a schematic view of another embodiment of an integrated internal combustion engine and waste heat recovery system;
FIG. 5 is a schematic view of another embodiment of an integrated internal combustion engine and waste heat recovery system;
FIG. 6 is a schematic view of another embodiment of an integrated internal combustion engine and waste heat recovery system; and
FIG. 7 is a schematic view of another embodiment of an integrated internal combustion engine and waste heat recovery system.

### DETAILED DESCRIPTION OF THE PREFERRED EMBODIMENTS

It is to be understood that the invention may assume various alternative orientations and step sequences, except where expressly specified to the contrary. It is also to be understood that the specific devices and processes illustrated in the attached drawings, and described in the following specification are simply exemplary embodiments of the inventive concepts. Hence, specific dimensions, directions or other physical characteristics relating to the embodiments disclosed are not to be considered as limiting.

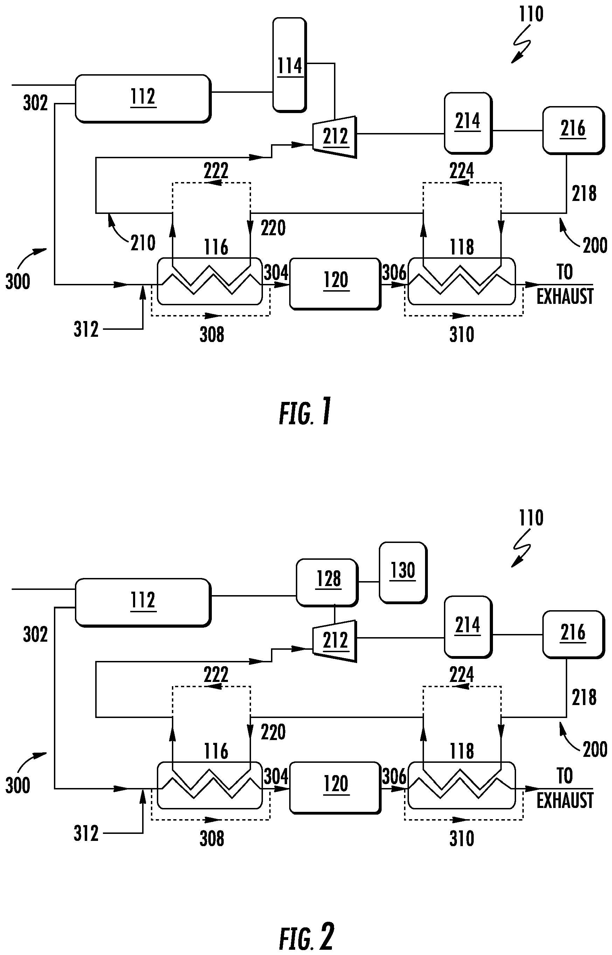

Referring now to FIG. 1, a preferred embodiment of an integrated system including an internal combustion engine and waste heat recovery system (an integrated system) 110 is depicted. In one embodiment, an integrated system 110 includes an internal combustion engine (ICE) 112, a mechanical connection 114, a first heat exchanger 116, a second heat exchanger 118, a SCR unit 120 and a waste heat recovery (WHR) system 200.

The WHR system 200 includes a system of working fluid conduits 210 in fluid communication with the first and second heat exchangers 116, 118, an expander 212 positioned along the working fluid conduits downstream from the first heat exchanger 116, a condenser 214 positioned along the working fluid conduits downstream from the expander 212, a pump/compressor 216 positioned along the working fluid conduits downstream from the condenser 214 and upstream from the second heat exchanger 118.

The system of working fluid conduits 210 connect the heat exchangers 118, 116, the expander 212, the condenser 214 and the pump 216. In some embodiment, the working fluid conduits 210 circulate the working fluid through conduits to the second heat exchanger 118, to the first heat exchanger 116, to the expander 212, to the condenser 214 and to the pump 216 as shown in FIG. 1. The system of working fluid conduits 210 can include additional components including, but not limited to, seals which prevent loss of working fluid or which prevent contaminants from entering the working fluid and valves for controlling the flow rate and pressure of the working fluid in the conduits. The working fluid can be an organic or non-organic fluid including, but not limited to, toluene, water/methanol mixture, water/ethanol mixture, water, dodecane, hexamethyldisiloxane.

As depicted in FIG. 1, the pump 216 is in fluid communication with the second heat exchanger 118 and the condenser 214. The second heat exchanger 118 facilitates thermal communication between working fluid in working fluid conduit 218 containing the working fluid from exiting the pump 216 and a conduit of exhaust gases 306 of exiting the SCR unit 120. The fluid conduit 218 is part of the system of working fluid conduits 210 that circulates the working fluid through the WHR system 200.

The exhaust gas conduit 306 exiting the SCR unit 120 is part of a system of exhaust gas conduits 300 which transfers exhaust gases from the ICE 112, to the first heat exchanger 116, to the SCR unit 120, to the second heat exchanger 118 and to an exhaust outlet. The system of exhaust gas conduits 300 can include additional components including, but not limited to, seals which prevent contaminants from entering the working fluid and valves for controlling the flow rate and pressure of the exhaust gases in the conduits.

In some embodiments, a filter is positioned along the system of exhaust gas conduits 300 upstream of the SCR unit 120 to remove particulates from the exhaust gases exiting the ICE before entering the SCR unit 120. The filter can be, but is not limited to, a diesel particulate filter. In some embodiments, a filter is positioned along the exhaust gas conduits 300 before the SCR unit 120 to remove particulates from the exhaust gases in a conduit 304 exiting the first heat exchanger 116 before entering the SCR unit 120.

The SCR unit 120 converts NOx in the exhaust gases exiting the ICE 112 into nitrogen and water vapor and in some cases converts urea into carbon dioxide and ammonia. The ammonia produced then reacts with the nitrous oxides to form nitrogen and water.

Further, as shown in FIG. 1, the expander 212 is in fluid communication with the condenser 214 and the first heat exchanger 116. In some embodiments, the expander 212 is positioned along the working fluid conduit system 210 upstream of the condenser 214 and downstream of the first heat exchanger 116. The first heat exchanger 116 facilitates thermal communication between the exhaust gases in an exhaust/outlet conduit 302 of the ICE 112 and a fluid conduit 220 containing the working fluid from the second heat exchanger 118.

In one embodiment, the first heat exchanger 116 is a high temperature heat exchanger that heats and/or evaporates the working fluid while keeping the exhaust gases at a temperature required for the SCR unit 120 to effectively filter out NOₓ in the exhaust gases.

As the working fluid passes through the heat exchangers 116, 118, the working fluid is heated and, depending on the thermodynamic cycle utilized, evaporated by energy imparted to the working fluid by the exhaust gases. As a result, the working fluid leaves the first heat exchanger 116 in a gaseous state. In some embodiments, the integrated system 110 utilizes a Rankine thermodynamic cycle. The expander 212 receives the heated working fluid from the first heat exchanger 116, extracts mechanical work that is passed via the mechanical connection 114 to the ICE 112 and releases the working fluid towards the condenser 214. At the output of the expander 212, the working fluid can be in a partial gaseous state and the condenser 214 reduces the working fluid specific volume prior to recirculating the working fluid back to the heat exchangers 116, 118 using the pump/compressor 216 that is upstream from the condenser 214. In some embodiments, the expander 212 can be an energy conversion turbine or an axial piston engine.

In some embodiment, the mechanical connection 114 can be, but is not limited to a gear assembly including a speed increasing gear assembly, a speed reduction gear assembly, a planetary gear reduction assembly or a direct one-to-one gear assembly.

The additional mechanical work provided to the ICE 112 through the mechanical connection 114 supplements the power produced by the ICE 112. In some embodiments, a control system can be used to control the amount of power supplied to the ICE 112.

In some embodiments, a first heat exchanger bypass conduit 308 is included around the first heat exchanger 116 so that some or all of the exhaust gases in the exhaust gas conduits from the ICE 112 and/or a reductant can bypass the first heat exchanger 116.

In some embodiments, a second heat exchanger bypass conduit 222 can be included around the first heat exchanger 116 so that some or all of the working fluid from the second heat exchanger 118 can bypass the first heat exchanger 116. Bypass valves (not shown) are used to selectively open and close the bypass conduits 308, 222. By controlling the valves, the first heat exchanger 116 can be bypassed if the temperature of the exhaust gases 302 would become too low for the SCR 120 to effectively remove the NOₓ when passing through the first heat exchanger 116.

In some embodiments, a third heat exchanger bypass conduit 310 is included around the second heat exchanger 118 so that the some or all exhaust gases exiting the SCR unit 120 in conduit 220 can bypass the second heat exchanger 118. Additionally, in some embodiments, a fourth bypass conduit 224 is included around the second heat exchanger 118 so that some or all of the working fluid from the pump 216 can bypass the second heat exchanger 118.

Bypass valves (not shown) are used to selectively open and close the bypass conduits 308, 222, 310, 224 to control the flow through bypass conduits 308, 222, 310, 224. The bypass valves may be any suitable type of valve capable of controlling the flow of the working fluid or exhaust gases. For examples, the valves can be two-way valves.

In one embodiment, the heat exchangers 116, 118 are counter-flow heat exchangers, but other known heat exchangers including, but not limited to, cross-flow and parallel flow heat exchangers may be used.

In some embodiment, the integrated system 110 includes a control system (not shown) in communication with the system components including, but not limited to, the ICE 112, mechanical connection 114, pump/compressor 216, expander 212, condenser/cooler 214, first heat exchanger 116, second heat exchanger 118, SCR unit 120, bypass valves and other valves. The control system can be used to control the aspects of the system including, but not limited to, the temperature and flow rates of various streams and components of the integrated system 110. For example, the control system can be configured to selectively open and close bypass valves around the heat exchangers 116, 118 to control the temperature of the inlet streams into the SCR unit 120.

The control system can include a central process unit (CPU) as well as various sensors including, but not limited to, pressure, temperature and flow rate sensors. The control system can continuously send and receive signals form the components of the system and the sensors to control and monitor the operation of various components of the integrated system 110 as well as the integrated system 110 as a whole.

In some embodiments, the control system can include an electronic control unit that monitors the performance of the ICE 112 and other components. The control system can use predetermined control parameters registered within the CPU to control the integrated system 110. The predetermined parameters can be based on information such as, but not limited to, the internal combustion engine speed, torque and throttle position as well as an expected pre-catalyst NOx and unburnt hydrocarbons concentration in the exhaust gases exiting the ICE from an ICE operating map.

Additionally, the CPU can use algorithms which factor in future road conditions and/or expected speed or road inclination data from a telematics or navigation system to estimate future heat load and pre-catalyst emissions. For example, when a negative slope in the road is detected ahead and the heat load tends to decrease below a value where the catalyst is active, the control system can raise the temperature of the SCR unit 120 in advance, e.g. by using one of the bypass conduits 308, 222, to overcome a driving phase with low temperature of the exhaust gasses exiting the ICE 112.

Those of skill will recognize that the control system described herein, for example, could be implemented as electronic hardware, software stored on a computer readable medium and executable by a processor, or combinations of both. The hardware or software used depends upon the particular application and design constraints imposed on the overall system. For example, the CPU can include a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor could be a microprocessor, but in the alternative, the processor could be any conventional processor, controller, microcontroller, or state machine. A processor could also be implemented as a combination of computing devices, e.g., a combination of a DSP and a microprocessor, a plurality of microprocessors, one or more microprocessors in conjunction with a DSP core, or any other such configuration. Software associated with such modules could reside in RAM memory, flash memory, ROM memory, EPROM memory, EEPROM memory, registers, a hard disk, a removable disk, a CD-ROM, or any other suitable form of storage medium known in the art. An exemplary storage medium is coupled to the processor such the processor reads information from, and write information to, the storage medium. In the alternative, the storage medium could be integral to the processor.

In some embodiments, a reductant is added to the integrated system 110 and can be, but is not limited to, urea, ammonia or other similar fluids. The reductant is added into the exhaust gases in the conduit 302 prior to the exhaust gases entering the first heat exchanger 116 via a conduit 312. The reductant is added prior to the first heat exchanger 116 to allow the reductant to uniformly mix with the exhaust gases from the ICE 112 prior to entry into the SCR unit 120. In one embodiment, the reductant can be added to the exhaust gases from the ICE 112 via spraying. In some embodiment, the conduit 312 is an injection device 312 allowing the reductant to be directly injected directly in the exhaust gases as shown in FIG. 1; however, the reductant can also be preheated or even premixed in some other fluid, such as hot air, to allow for improved dilution within the exhaust gases.

In one embodiment, the exhaust gases with the reductant diluted therein enters the SCR unit 120 via a conduit 304. In some embodiments, the SCR unit 120 in which most of the catalytic reduction of the NOₓ occurs includes a catalytic surface having a catalytic material thereon. In some embodiments, a portion of the catalytic material found in the SCR unit 120 is additionally found in at least a portion of heat exchangers 116, 118. By including the catalytic material in the heat exchangers 116, 118, the size of the SCR unit 120 can be reduced, thereby reducing the total cost and size of the integrated system 110. Additionally, this configuration allows the total length of fluid conduits that the exhaust gases travel through is reduced and, thus, the friction and corresponding backpressure in the ICE 112 is reduced.

In one embodiment, the reductant is a urea solution that decomposes to ammonia in the exhaust gases, and is subsequently absorbed by the SCR unit 120. The temperature of the exhaust gases and reductants entering the SCR unit 120 must be high enough so that the chemical reaction can effectively occur. Therefore, the control system can control the flow rate of the exhaust gases and working fluid in in the first heat exchanger 116 to achieve a desired set temperature for the exhaust gases in the outlet conduit 304 of the heat exchanger 116 to optimize the operation of the SCR unit 120.

The exhaust gases in the conduit 306 leaving the SCR unit 120 enter the second heat exchanger 118. In some embodiments, the second heat exchanger 118 is a low temperature heat exchanger and allows heat exchange between the exhaust gases from the SCR unit 120 and the working fluid leaving the pump 216. The arrangement of the first and second heat exchangers 116, 118 in a two-stage heat exchanger configuration ensures that the working fluid reaches the maximum temperature possible as it exits the first heat exchanger 116 while maintaining the required temperature of exhaust gases in the conduit 304 entering the SCR unit 120. The high temperature of the working fluid leaving the first heat exchanger 116 has a significant effect on the efficiency of the integrated system 110. Therefore, the control system can control the flow rate of the exhaust gases in conduit 302 and the working fluids in conduit 220 to achieve a desired set temperature and/or pressure for the working fluid of the heat exchanger 116 to optimize the operation of WHR system 200.

FIG. 2 depicts another embodiment of the integrated system 110. In this figure, elements having the same number as those in FIG. 1 work as described herein above, unless noted otherwise, and are described again only for clarity.

As shown in FIG. 2, in one embodiment the expander 212 is connected to a generator 128. The generator 128 converts the mechanical energy of the expander 212 to electric energy. The electric energy can be used by other systems in the vehicle, including, but not limited to the vehicle's electric system. In some embodiments, the generator 128 is connected to an energy storage device 130 including, but not limited to, a battery. In some embodiments, the generator 128 may additionally have a mechanical connection with the ICE 112 with possible selective engagement. This connection may be used to transfer energy from the ICE 112 to the generator 128, from the expander 212 to the ICE 112 or from the ICE 112 to the expander 212.

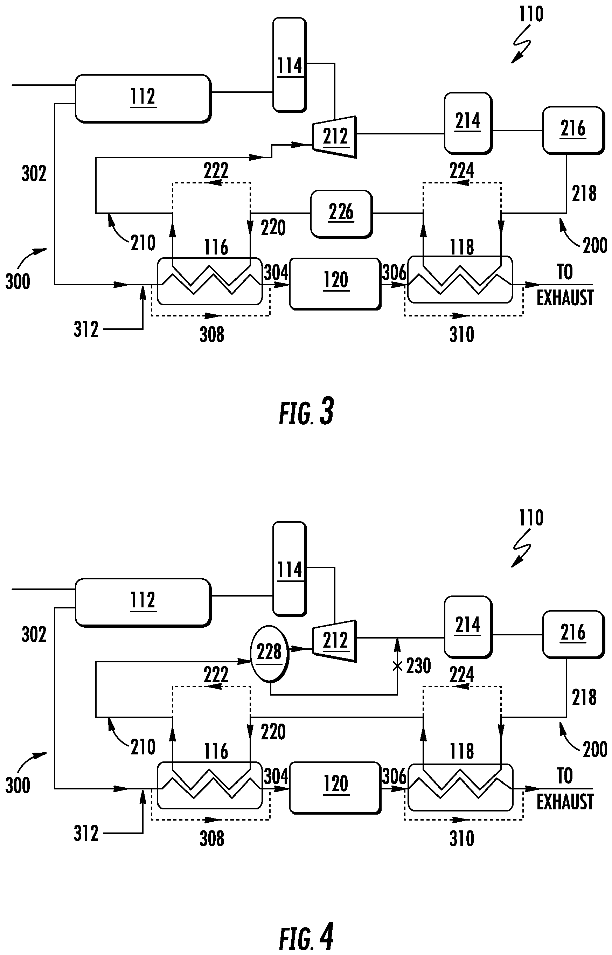

FIG. 3 depicts another embodiment of the integrated system 110. In this figure, elements having the same number as those in FIGs. 1-2 work as described herein above, unless noted otherwise, and are described again only for clarity.

As shown in FIG. 3, in another embodiment, the integrated system 110 includes a pressure-increasing device 226 between the heat exchangers 116, 118 along the working fluid conduit system 210. The pressure-increasing device 226 can be, but is not limited to, a pump, compressor or pressure increasing injector. The pressure-increasing device 226 allows the second heat exchanger 118 to operate at a lower pressure and still achieve the desired higher pressure of the working fluid at the outlet of the first heat exchanger 116 compared to a system without the pressure-increasing device 226. By operating at a lower pressure, the mechanical stresses on the second heat exchanger 118 are reduced, resulting in a reduction in the weight and cost of the second heat exchanger 118. Additionally, the pump/compressor 216 can be reduced in size to handle a working fluid at a lower pressure compared to a system without the pressure-increasing device 226.

In some embodiments, where the integrated system 110 utilizes a Rankine thermodynamic cycle, the second heat exchanger 118 does not boil the working fluid and the pressure-increasing device 226 is a liquid pump, which consumes a lower amount of energy and increases the cycle efficiency as compared to a system using a pressure-increasing device in the gaseous regime.

In another embodiment, the working fluid leaves the first heat exchanger 116 in a liquid or partially evaporated phase. The working fluid in at least partial liquid phase, can enter the expander 212 and the expander 212 vaporizes the working fluid. In this embodiment, the expander 212 has a large volumetric expansion ratio to accommodate the at least partial liquid phase working fluid.

FIG. 4 depicts an additional embodiment of the integrated system 110. In this figures elements having the same number as those in FIGs. 1-2 work as described herein above, unless noted otherwise, and are described again only for clarity.

As shown in FIG. 4, in another embodiment, the integrated system 110 does not include a pressure-increasing device. The integrate system 110 utilizes a flash cycle to supply only vapor to the expander 212. A flash tank 228 is in fluid communication with the first heat exchanger 116 via the working fluid conduit system and separates the working fluid into liquid and vapor phases. The liquid phase of working fluid flows from the flash tank 228 and is combined with the working fluid leaving the expander 212 before entering the condenser 214. The vapor phase of the working fluid exits the flash tank and flows upstream to the expander 212. The flash tank 228 can include a pressure decreasing nozzle (not shown), which causes part of the liquid contained in the fluid to vaporize.

In some embodiments, the liquid phase of the working fluid that remains in the flash tank 228 is fed through a pressure-reducing device 230 and is fed into the condenser 214 to ensure that any gas remaining in the liquid phase is condensed to avoid cavitation in the pump 216 downstream.

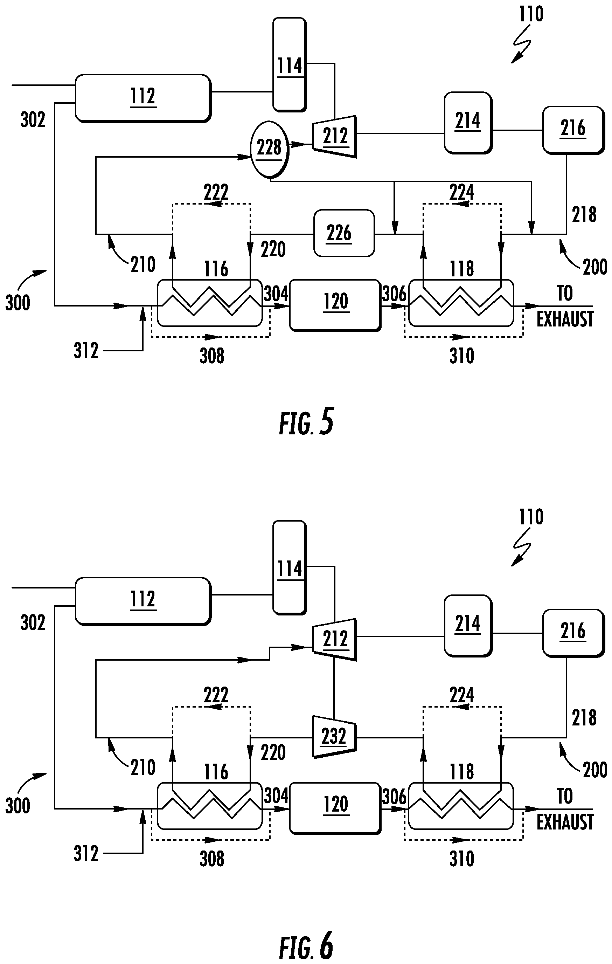

FIG. 5 depicts an additional embodiment of the integrated system 110. In this figures elements having the same number as those in FIGs. 1-2 work as described herein above, unless noted otherwise, and are described again only for clarity.

In some embodiments, as shown in FIG. 5, the integrated system 110 includes a pressure-increasing device 226 and a flash tank 228. All or a portion of the liquid phase working fluid exiting the flash tank 228 can be combined with preheated working fluid leaving the second heat exchanger 118 before the working fluid enters the pressure-increasing device 226 and all or a portion of the liquid phase fluid exiting the flash tank 228 can be combined with working fluid exiting the pump 216. The pressure-increasing device 226 provides a sufficient pressure difference between the flash tank 228 and the second heat exchanger 118 to ensure that the liquid phase working fluid flows toward the first heat exchanger 116.

FIG. 6 depicts another embodiment of the integrated system 110. In this figure, elements having the same number as those in FIGs. 1-2 work as described herein above and are described again only for clarity. As shown in FIG. 6, the integrated system 110 utilizes a second expander 232 positioned along the system of working fluid conduits 210 between downstream of the second heat exchanger 118 and upstream of the first heat exchanger 116. The second expander 232 is in fluid communication with the second heat exchanger 118 and the first heat exchanger 116. The working fluid leaving the second heat exchanger 118 enters the second expander 232. The second expander 232 receives the heated working fluid from the second heat exchanger 118, extracts mechanical work and releases the working fluid towards the first heat exchanger 116. The first heat exchanger 116 re-heats the working fluid. The working fluid leaving the first heat exchanger 116 is directed towards the first expander 212. The second expander 232 can be mechanically connected to the first expander 212. Expanders 212, 232 can be connected to the mechanical connection 114.

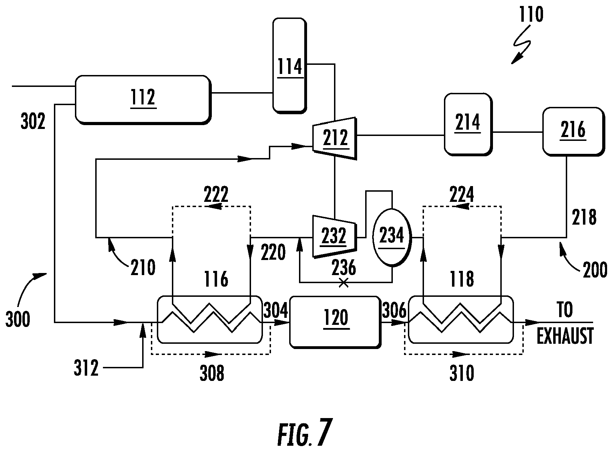

FIG. 7 depicts another embodiment of the integrated system 110. In this figure, elements having the same number as those in FIGs. 1-2 work as described herein above and are described again only for clarity. As shown in FIG. 7, the integrated system 110 utilizes a second expander 232 positioned along the system of working fluid conduits 210 between downstream of the second heat exchanger 118 and upstream of the first heat exchanger 116. The second expander 232 is in fluid communication with the second heat exchanger 118 and the first heat exchanger 116. The working fluid leaving the second heat exchanger 118 enters the second expander 232. The second expander 232 receives the heated working fluid from the second heat exchanger 118, extracts mechanical work and releases the working fluid towards the first heat exchanger 116. The first heat exchanger 116 re-heats the working fluid. The working fluid leaving the first heat exchanger 116 is directed towards the first expander 212. The second expander 232 can be mechanically connected to the first expander 212. Expanders 212, 232 can be connected to the mechanical connection 114. Additionally, a flash tank 234 is placed in the working fluid conduit downstream from the second heat exchanger 118 and upstream from the second expander 232. The flash tank 234 provides working fluid in vapor phase to the second expander 232 and working fluid in liquid phase to the first heat exchanger 116

In some embodiment, a pressure-decreasing device 236 is positioned along the working fluid conduits connecting the flash tank 234 and the first heat exchanger 116.

The integrated systems 110 as described above can be included as part of a motor vehicle, in particular, but not exclusively, to a commercial vehicle.

Although a limited number of exemplary embodiments are described herein, those skilled in the art will readily recognize that there could be variations, changes and modifications to any of these embodiments and those variations would be within the scope of the disclosure. In accordance with the provisions of the patent statutes, the present invention has been described in what is considered to represent its preferred embodiments. However, it should be noted that the embodiments can be practiced otherwise than as specifically illustrated and described without departing from its spirit or scope.

## Claims

1. An integrated internal combustion engine and waste heat recovery system, comprising:
an internal combustion engine;
a system of exhaust gas conduits connected to the internal combustion engine;
a first heat exchanger in fluid communication with the exhaust gas conduits;
a second heat exchanger in fluid communication with the exhaust gas conduits downstream of the first heat exchanger;
a selective catalytic reduction unit positioned between the first and second heat exchangers along the exhaust gas conduits;
a waste heat recovery (WHR) system including:
a system of working fluid conduits in fluid communication with the first and second heat exchangers, wherein the first heat exchanger is positioned downstream of the second heat exchanger along the working fluid conduits,
an expander positioned along the working fluid conduits downstream from the first heat exchanger,
a condenser positioned along the working fluid conduits downstream from the expander,
a pump or compressor positioned along the working fluid conduits downstream from the condenser and upstream from the second heat exchanger, and
a pressure-increasing device positioned along the working fluid conduits between the first and second heat exchangers; and
a mechanical connection connecting the internal combustion engine and the expander,
wherein the first and second heat exchangers are configured to facilitate thermal communication between the working fluid conduits and the exhaust gas conduits,
wherein the working fluid conduits include at least one bypass conduit around one of the first or second heat exchangers, and
wherein the exhaust gas conduits include at least one bypass first bypass conduit around one of the first or second heat exchangers.

2. The integrated internal combustion engine and WHR system of claim 1, further comprising a flash tank positioned along the working fluid conduits in fluid communication with the first heat exchanger, the second heat exchanger and the expander.

3. The integrated internal combustion engine and WHR system of claim 2,
wherein the flash tank is configured to receive working fluid from the first heat exchanger and provide working fluid in a vapor phase to the expander and working fluid in a liquid phase to the second heat exchanger.

4. The integrated internal combustion engine and WHR system of claim 3,
wherein the flash tank is configured to provide working fluid in the liquid phase to the pressure-increasing device.

5. The integrated internal combustion engine and WHR system of any one of the preceding claims, wherein the exhaust gas conduits include an injection device configured to inject a reductant into the exhaust gas conduits upstream of the SCR unit.

6. The integrated internal combustion engine and WHR system of any one of the preceding claims, wherein the expander is connected to a generator.

7. The integrated internal combustion engine and WHR system of claim 6,
wherein the generator is connected to the internal combustion engine.

8. The integrated internal combustion engine and WHR system of any one of the preceding claims, wherein a catalytic material is contained in the SCR unit and at least one of the first and second heat exchangers.

9. The integrated internal combustion engine and WHR system of any one of the preceding claims, wherein the pressure-increasing device is a pump, compressor or pressure increasing injector.

10. An integrated internal combustion engine and waste heat recovery system, comprising:
an internal combustion engine;
a system of exhaust gas conduits connected to the internal combustion engine;
a first heat exchanger in fluid communication with the exhaust gas conduits;
a second heat exchanger in fluid communication with the exhaust gas conduits downstream of the first heat exchanger;
a selective catalytic reduction unit positioned between the first and second heat exchangers along the exhaust gas conduits;
a waste heat recovery (WHR) system including:
a system of working fluid conduits in fluid communication with the first and second heat exchangers, wherein the first heat exchanger is positioned downstream of the second heat exchanger along the working fluid conduits,
an expander positioned along the working fluid conduits downstream from the first heat exchanger,
a condenser positioned along the working fluid conduits downstream from the expander,
a pump or compressor positioned along the working fluid conduits downstream from the condenser and upstream from the second heat exchanger, and
a flash tank positioned along the working fluid conduits upstream of the first heat exchanger and downstream from the expander; and
a mechanical connection connecting the internal combustion engine and the expander,
wherein the first and second heat exchangers are configured to facilitate thermal communication between the working fluid conduits and the exhaust gas conduits;
wherein the working fluid conduits include at least one bypass conduit around one of the first or second heat exchangers, and
wherein the exhaust gas conduits include at least one bypass first bypass conduit around one of the first or second heat exchangers.

11. The integrated internal combustion engine and WHR system of claim 10, wherein the flash tank is configured to provide working fluid in the liquid phase to the condenser and working fluid in the vapor phase to the expander.

12. The integrated internal combustion engine and WHR system of claim 11, further comprising a pressure-decreasing device positioned along the working fluid conduits connecting the flash tank and the condenser.

13. An integrated internal combustion engine and waste heat recovery system, comprising:
an internal combustion engine;
a system of exhaust gas conduits connected to the internal combustion engine;
a first heat exchanger in fluid communication with the exhaust gas conduits;
a second heat exchanger in fluid communication with the exhaust gas conduits downstream of the first heat exchanger;
a selective catalytic reduction unit positioned between the first and second heat exchangers along the exhaust gas conduits;
a waste heat recovery (WHR) system including:
a system of working fluid conduits in fluid communication with the first and second heat exchangers, wherein the first heat exchanger is positioned downstream of the second heat exchanger along the working fluid conduits,
a first expander positioned along the working fluid conduits downstream from the first heat exchanger,
a condenser positioned along the working fluid conduits downstream from the first expander,
a pump or compressor positioned along the working fluid conduits downstream from the condenser and upstream from the second heat exchanger, and
a second expander positioned along with working fluid conduits downstream from the second heat exchanger and upstream of the first heat exchanger; and
a mechanical connection connecting the internal combustion engine and the first and second expanders,
wherein the first and second heat exchangers are configured to facilitate thermal communication between the working fluid conduits and the exchange gas conduits;
wherein the working fluid conduits include at least one bypass conduit around one of the first or second heat exchangers, and
wherein the exhaust gas conduits include at least one bypass first bypass conduit around one of the first or second heat exchangers.

14. The integrated internal combustion engine and WHR system of claim 13, further comprising a flash tank positioned along the working fluid conduits downstream from the second heat exchanger and upstream from the second expander;
wherein the flash tank provides working fluid in vapor phase to the second expander and
wherein the flash tank provides working fluid in liquid phase to the first heat exchanger.

15. The integrated internal combustion engine and WHR system of claim 14, further comprising a pressure-decreasing device positioned along the working fluid conduits connecting the flash tank and the first heat exchanger.
